# EUROPEAN PATENT APPLICATION

(11) **EP 2 571 283 A1**
(43) Date of publication of application: **20.03.2013**
(21) Application number: 11181362.2
(22) Date of filing: 15.09.2011
(51) Int. Cl.: H04N 21/485, H04N 21/475, H04N 21/4782

(54) **An apparatus and a method for content selection, retrieval and presentation in a television browser environment**

(71) Applicant: Uniqoteq Ltd, 20540 Turku (FI)
(72) Inventor: Tapiola, Antti, 25460 Kisko (FI); Hakunti, Jussi, 20900 Turku (FI); Leino, Tommi, 21430 Yliskulma (FI)
(74) Representative: Papula Oy

(57) **Abstract**

The invention concerns a method, a computer program and an apparatus performing the method. In the method a mobile node determining parameters for user interface adaptation. The mobile node comprises an interface for communicating with a display. The mobile node provides the parameters for user interface adaptation to a remote node and obtains the user interface layout from the remote node in response. Mobile node also obtains a set of content items comprising content items and presents the content items from the set of content items. The content items are arranged on the display based on the user interface layout.

## Description

### BACKGROUND OF THE INVENTION

### Field of the invention:

The invention relates to mobile communications networks and an apparatus and a method for content selection, retrieval and presentation in a television browser environment.

### Description of the Related Art:

The introduction of enhanced bitrates available in 3G and 4G networks have made it meaningful to use television as a browser display for mobile terminals, that is, mobile nodes. Content may be retrieved over a radio connection provided by a 3G or a 4G cellular radio access network for presentation on a television display connected to a mobile terminal such as a mobile phone. Examples of the 3G and 4G radio access network technologies are the Universal Mobile Communication System (UMTS) and the Long-Term Evolution (LTE) standardized by the 3G Partnership Project (3GPP). A UMTS radio access network provides bitrates up to 14 Mbit/s with the HSDPA feature and up to 42.2 Mbit/s in a dual-cell and up to 84.4 Mbit/s in a dual-cell with Multiple Input-Multiple Output (MIMO) antennas. The dual-cell is supported by the 3GPP release 8 and MIMO by 3GPP release 7. One of the main objectives of the LTE is the providing of downlink data rates of at least 100 Mbps and uplink date rates of at least 50 Mbps. As of 11 May 2011 over two thirds of the 398 commercial Highspeed Packet Access (HSPA) operators support peak downlink bitrate of at least 7.2 Mbit/s. However, in most cases the average bitrates supported continuously for most of the users fall far below the maximum bitrates made available by the standards.

A problem with the present Internet portals and services is that they have not been tailored for use in mobile terminal based browsers. In many cases the Internet portals present graphics, video and animation intensive main pages. Even if the main pages would download tolerably quickly, the navigation to more specific services or to more specific content categories requires further downloading and further delays. For each of the more specific content categories there may be further portals with graphics, video and animation intensive main pages. Even if the download speed would be sufficient as such to provide tolerable delays, there may appear delays in the service provider side in the answering of the Hypertext Transfer Protocol (HTTP) requests from clients. In some cases where a television is used as a display for a mobile terminal browser, the users might appreciate the possibility of changing quickly from the viewing of television programs to the viewing of Internet content on the television screen and back to the viewing of television programs. The changing might occur, for example, during commercials in between the television programs.

There is also a problem with present user interfaces prepared for the consumption of downloadable content. By consumption is meant, for example, reading of text, viewing of moving picture and watching pictures. Namely, the user interfaces for content consumption are static in structural aspects meaning that the user interfaces are designed with a specific download bitrate or network latency in mind. Usually the user interfaces are designed with a quality of service in mind that is above average. Typically, modern browsers, laptop computers and Internet services have been designed with Digital Subscriber Line (DSL) or Wireless Local Area Network (WLAN) quality of service in mind. Sometimes a user may be allowed to choose text only browsing, for example, via Wireless Application Protocol (WAP) gateways, but that is insufficient for most purposes and users. A further problem arises when a mobile phone may use different displays, in which case a single user interface does not provide best possible user experience. Further, it would be beneficial to be able to tailor the user interface and content based on the user's preferences.

It would be beneficial to be able to dynamically change user interfaces for mobile terminal based browsers that use a television or a computer display to present content.

### SUMMARY OF THE INVENTION:

According to an aspect of the invention, the invention is a method, comprising: determining by a mobile node at least one parameter for user interface adaptation, the mobile node comprising an interface for communicating with a display; providing the at least one parameter for user interface adaptation to a remote node from the mobile node; obtaining a user interface layout from the remote node to the mobile node, in response to the providing of the at least one parameter for user interface adaptation; obtaining a set of content items comprising at least two content items to the mobile node, the at least two content items further comprising a first content item and a second content item; and presenting at least one content item from the set of content items, the at least one content item being arranged on the display based on the user interface layout.

According to a further aspect of the invention, the invention is an apparatus comprising: an interface for a display; a memory; and at least one processor configured to determine the apparatus at least one parameter for user interface adaptation, to provide the at least one parameter for user interface adaptation to a remote node from the apparatus, to obtain a user interface layout from the remote node to the apparatus, in response to the providing of the at least one parameter for user interface adaptation, to obtain a content item group comprising at least two content items to the apparatus, the at least two content items further comprising a first content item and a second content item, and to present at least one content item from the content item group, the at least one content item being arranged on the display based on the user interface layout.

According to a further aspect of the invention, the invention is a mobile node comprising the apparatus.

According to a further aspect of the invention, the invention is a television browser node comprising the apparatus.

According to a further aspect of the invention, the invention is an apparatus comprising: means for determining by a mobile node at least one parameter for user interface adaptation, the mobile node comprising an interface for communicating with a display; means for providing the at least one parameter for user interface adaptation to a remote node from the mobile node; means for obtaining a user interface layout from the remote node to the mobile node, in response to the providing of the at least one parameter for user interface adaptation; means for obtaining a set of content items comprising at least two content items to the mobile node, the at least two content items further comprising a first content item and a second content item; and means for presenting at least one content item from the set of content items, the at least one content item being arranged on the display based on the user interface layout.

According to a further aspect of the invention, the invention is a computer program comprising code adapted to cause the following when executed on a data-processing system: determining by a mobile node at least one parameter for user interface adaptation, the mobile node comprising an interface for communicating with a display; providing the at least one parameter for user interface adaptation to a remote node from the mobile node; obtaining a user interface layout from the remote node to the mobile node, in response to the providing of the at least one parameter for user interface adaptation; obtaining a set of content items comprising at least two content items to the mobile node; and presenting at least one content item from the set of content items, the at least one content item being arranged on the display based on the user interface layout.

According to a further aspect of the invention, the invention is a computer program product comprising the computer program.

In one embodiment of the invention, the obtaining of the user interface layout by a mobile node may mean requesting the user interface layout from the remote node and receiving the user interface layout in response to the mobile node from the remote node.

In one embodiment of the invention, the obtaining of the set of content items by a mobile node may mean requesting the set of content items from the remote node and receiving the set of content items in response to the mobile node from the remote node.

In one embodiment of the invention, the user interface adaptation comprises, for example, a positioning and sizing of at least one content item or at least one placeholder for a content item on the display. The adaptation may be performed in the remote node or in the mobile node.

In one embodiment of the invention, the user interface adaptation comprises user interface layout adaptation for a user interface, which is presented on the display. The adaptation may take into account at least one property of the display, for example, provided as part of the at least one parameter for user interface adaptation. The adaptation may be performed in the remote node or in the mobile node.

In one embodiment of the invention, the user interface adaptation comprises a selection of a user interface layout from a set of at least two user interface layouts. The selection may be performed, for example, using at least one quality of service parameter, for example, an average bitrate, provided as part of the at least one parameter for user interface adaptation, for example, to the remote node. The selection may be performed in the remote node.

In one embodiment of the invention, the user interface adaptation comprises selection of content items such as, for example, videos, animations, pictures, hypertext pages that are presented on the user interface upon the display.

In one embodiment of the invention, a content item comprises at least one file or at least one block of memory. A content item may represent, for example, at least one video, at least one audio recording, at least one picture, or at least one hypertext.

In one embodiment of the invention, a content item is a content file. The content may be, for example, at least one video, audio, animation, image, text and hypertext.

In one embodiment of the invention, the user interface adaptation comprises the selection of predefined placeholders, for example, empty slots within a user interface layout for content items listed in a content catalog. The user interface layout may also be called a user interface template or form.

In one embodiment of the invention, the content catalog is formed by providing a WWW-page on a posting server for posting content by webmasters. The WWW-page may provide a form for writing or posting text and associating pictures with the text. The webmasters may select from among a number of templates for their content that will then be adapted to be presented in a placeholder in a user interface layout. The content received to the posting server may be transferred to a server from which the content may be retrieved by the mobile node as a result of the inclusion of the content in a content catalog. The posting server may also provide a mail client or a multimedia messaging client for receiving messages provided in a format suitable for adapting as content items presented in a placeholder in a user interface layout. The format may, for example, comprise specific fields for text and attached images. The format may also specify the placement of the attached images among the text.

In one embodiment of the invention, the remote node is a content server.

In one embodiment of the invention, the remote node may be a server providing a user interface layout or a server providing a content catalog, which may be separate servers, computer units or network nodes.

In one embodiment of the invention, the content catalog is provided to the mobile node from a server separate from the remote node.

In one embodiment of the invention, the user interface layout may be received by the mobile node from a first server. In one embodiment of the invention, the content catalog may be received from a second server. In one embodiment of the invention, at least one content item comprised in the set of content items comprising at least two content items is received to the mobile node from a third server. In one embodiment of the invention, the at least one parameter for user interface adaptation may be provided by the mobile node to at least one of the first server and the second server. The user interface layout may be transmitted by the first server to the mobile node in response to the receiving of the at least one parameter for user interface adaptation or later. In one embodiment of the invention, the content catalog may be transmitted by the second server to the mobile node in response to the receiving of the at least one parameter for user interface adaptation or later. In one embodiment of the invention, at least one of the first server, the second server and the third server may be hosted in a single physical server or network node. The remote node may comprise at least one of the first server, the second server and the third server.

In one embodiment of the invention, the server used for obtaining a set of content items comprising at least two content items to the mobile node is separate from the remote node and the server providing the content catalog. In one embodiment of the invention, all these servers are a same physical server or network node.

In one embodiment on the invention, the method further comprises or the computer program may further comprise code adapted to cause the following when executed on a data-processing system: obtaining a content catalog to the mobile node, the content catalog comprising at least two content catalog items, among said at least two content catalog items a first content catalog item and a second content catalog item, the first content catalog item further comprising a first link to the first content item and the second content catalog item further comprising a second link to the second content item. The content catalog may be provided to the mobile node from the remote node, which may have provided the user interface layout, or from a separate remote node such as an IP-network server. In one embodiment of the invention, the remote node that provides the content catalog to the mobile node may also receive at least one of the at least one parameter for user interface adaptation from the mobile node, for example, in association with a request for the user interface layout, in association with a request for content catalog or separately. The remote node providing the content catalog to the mobile node may also request the at least one of the at least one parameter for user interface adaptation from the remote node providing the user interface layout to the mobile node, based on, for example, a reference provided by the mobile node.

In one embodiment on the invention, the method further comprises or the computer program may further comprise code adapted to cause the following when executed on a data-processing system: submitting the at least one of the at least one parameter for user interface adaptation to a user interface adaptation information server from the mobile node; storing the at least one parameter for user interface adaptation in a memory of the user interface adaptation information server; and the step of providing the at least one parameter for user interface adaptation to a remote node from the mobile node comprises that the mobile node provides a reference to the stored at least one parameter for user interface adaptation to the remote node. The reference may be a URI, a URL identifying the storage location of the at least one parameter for user interface adaptation or an identifier of the mobile node or an identifier a user or a group of users of the mobile node, for example, a Mobile Subscriber ISDN Number, a SIP URI, a Tel URI or an International Mobile Subscriber Identity (IMSI). Based on the reference, the remote node providing the content catalog obtains the at least one parameter for user interface adaptation from user interface adaptation information server.

In one embodiment on the invention, the at least one of the at least two content catalog items in the content catalog is selected, for example, by the remote node or another remote node, to the content catalog based on at least one of the at least one parameter for user interface adaptation. The selection may be performed in the remote node providing the content catalog to the mobile node. The selection may be performed in response to the receiving of the at least one of the at least one parameter for user interface adaptation, for example, from the mobile node. The selection may comprise picking to the content catalog content items, which have in the content catalog item information at least one content item attribute that is compatible with the at least one parameter for user interface adaptation. Example, of such content item attributes comprise at least one of: content item size in bytes, content item dimensions for optimal presentation, audience for the content item in terms of at least one audience parameter such as, for example, at least one of age, gender, marital status, family status, income, topic of the content item in terms of a number of predefined interest categories, for example, news or sports, location of desired audience, and political stance of the content item.

In one embodiment on the invention, the step of presenting at least one content item from the set of content items comprises: selecting a first placeholder for the first content item and a second placeholder for the second content item on the user interface layout, the selection being based on information in the first content catalog item describing the first content item, information in the second content catalog item describing the second content item, information associated with the first placeholder in association with the user interface layout, and information associated with the second placeholder in association with the user interface layout.

In one embodiment on the invention, the information, associated with the first placeholder in association with the user interface layout, and the information, associated with the second placeholder in association with the user interface layout, comprise at least one placeholder attribute, each placeholder attribute comprising at least one an identifier of a placeholder, a priority, a position type comprising information on the area where the placeholder is located on the user interface layout, a size of a placeholder, dimensions of a placeholder, a shape of a placeholder and a position of a placeholder on the user interface layout, a temporal movement of the placeholder on the display, a genre for a content item allowed to be presented in the placeholder, a viewer age group for a content item allowed to be presented in the placeholder, and whether audio is played for content in a placeholder.

In one embodiment on the invention, the information, in the first content catalog item that describes the first content item, and the information, in the second content catalog item that describes the second content item comprise content item presentation attributes, each content item presentation attribute comprising at least one of a maximum or a minimum display size for optimal viewing of the content item, a size of the content item, an aspect radio of the content item, an identifier for a placeholder for the content item, a list of placeholder identifiers allowed for the content item, a position type allowed for the content item comprising information on the area where the placeholder is located on the user interface layout, a priority for the content item, a size of the content item in pixels or centimeters on the display, the dimensions of a content item, an aspect radio of the content item, a shape of the content item, whether a moving placeholder is allowed for the content item, a genre of the content item, an age group of the content item, a viewer age group of the, content item, a desired area of a placeholder to present the content item, and whether audio is played for content in a placeholder for the content.

In one embodiment of the invention, the step of determining by the mobile node the at least one parameter for user interface adaptation comprises: obtaining via the interface to the mobile node at least one display property of the display; and adding the at least one display property among the at least one parameter for user interface adaptation.

In one embodiment of the invention, the step of determining by the mobile node the at least one parameter for user interface adaptation comprises: determining a location of the mobile node; and adding the location among the at least one parameter for user interface adaptation.

In one embodiment of the invention, the step of determining by the mobile node the at least one parameter for user interface adaptation comprises: determining at least one quality of service parameter for radio communication between the mobile node and a base station; and adding the at least one quality of service parameter among the at least one parameter for user interface adaptation.

In one embodiment of the invention, the adding of at least parameter or property or other information among the at least one parameter for user interface adaptation comprises the adding of the at least parameter or property or other information to a data structure storing the at least one parameter for user interface adaptation. The data structure may be initially empty. The data structure may be, for example, a list, a table, a record, a structured document or a structured document fragment, for example, an Extensible Markup Language (XML) document. The structured document or the structured document fragment may be a JavaScript Object Notation (JSON) document or document fragment.

In one embodiment of the invention, the at least one quality of service parameter comprises at least one of radio interface bitrate, radio interface delay, radio interface round trip time and radio interface bit error rate. The radio interface delay may be the delay from the base station to the mobile node.

In one embodiment of the invention, the step of determining by the mobile node the at least one parameter for user interface adaptation comprises: determining at least one user profile parameter in the mobile node; and adding the at least one user profile parameter among the at least one parameter for user interface adaptation.

In one embodiment of the invention, the at least one user profile parameter comprises an age of the user.

In one embodiment of the invention, the step of determining by the mobile node the at least one parameter for user interface adaptation comprises: determining using an audio sensor the number of distinguishable speakers within the range of the audio sensor; and adding the number of distinguishable speakers as a parameter among the at least one parameter for user interface adaptation.

In one embodiment of the invention, the step of determining by the mobile node the at least one parameter for user interface adaptation comprises: determining using a camera the number of distinguishable faces within the range of the camera; and adding the number of distinguishable faces as a parameter among the at least one parameter for user interface adaptation.

In one embodiment of the invention, the method further comprises: performing a radio interface quality of service measurement regarding at least one of a bitrate, a bit error rate, an average bitrate and a delay by the mobile node; and reporting results of the quality of service measurement to a base station serving the mobile node.

In one embodiment of the invention, the method further comprises: performing a batch of radio interface quality of service measurements for a specified time, for example, 1 to 20 minutes, by the mobile node or the base station, at the request of the base station serving the mobile node, regarding at least one of a bitrate, a bit error rate, a latency, a downlink delay, an average bitrate, a number of inter-system handoffs or changes in the cell camped in within a specified time window, which is, for example, 10 seconds to ten minutes; and reporting results of the quality of service measurement batch to the base station that requested the measurement, for example, to the requesting base station, upon being camped on again in the cell of the requesting base station, or to another base station. An inter-system handoff or a cell change comprises a handoff or a cell change between, for example, at least two of WCDMA, High-Speed Downlink Packet Access (HSDPA), Enhanced Data rates for Global Evolution (EDGE), 2G, General Packet Radio Service (GPRS), Code Division Multiple Access (CDMA), Global System of Mobile Communications (GSM), Digital Cellular System (DCS), Advanced Mobile Phone System (AMPS), Digital AMPS (D-AMPS), CDMA2000, High-Speed Circuit Switched Data (HSCSD). The handoff or cell change may be between any of these mentioned systems.

In one embodiment of the invention, the method further comprises: receiving the results of the quality of service measurement to a service quality measurement entity; and forming location and time specific statistics of average bitrates in the service quality measurement entity.

In one embodiment of the invention, the method further comprises: receiving a location of the mobile node to the remote node; and obtaining from the service quality measurement entity an anticipated bitrate for content downloading to the mobile node based on the location of the mobile node and current time.

In one embodiment of the invention, the display is a remote display. The remote display may communicate with the mobile node via the interface.

In one embodiment of the invention, the display is comprised in the mobile node. In one embodiment of the invention, the mobile node is a unit of a display, for example, a television, which may be called a television set.

In one embodiment of the invention, the mobile node is configured to be connected to a television. The mobile node may comprise a connector or an interface for a cable or a wireless connection to the television.

In one embodiment of the invention, the mobile node is a unit in association with a television. The unit may be removable.

In one embodiment of the invention, the at least one processor of the apparatus is further configured to receive from a remote control unit or from a television comprising the display an indication of a change to television screen or display closed mode and to transition to the download enabled state at the mobile node.

In one embodiment of the invention, the at least one processor of the apparatus is further configured to receive from a remote control unit an indication of a change to television program viewing mode and to transition to the download enabled state at the apparatus in response to the change to television program viewing mode. The change to television program viewing mode may be from a content browsing mode. The change may be indicated using a remote control unit button. The apparatus may be in the browsing mode or in the television program viewing mode. The apparatus may also be in a television screen or display closed mode. The apparatus may enter the download enabled state in response to entering the television screen or display closed mode.

In one embodiment of the invention, the at least one processor of the apparatus is further configured to detect the elapsing of a predefined time from receiving the indication of the change to a television program viewing mode. The predefined time may be, for example, one minute. The predefined time may be determined to represent a time that with a probability that exceeds a predefined threshold, for example, 0.9, for the current users continued viewing of television program for at least a predefined number of next minutes, for example next 15 minutes, without transitioning back to content browsing mode.

In one embodiment of the invention, the at least one processor of the apparatus is further configured to receive from a network providing the cellular wireless connection an indication of at least one suitable time for performing downloading. From the network may also be received a schedule of suitable times for the downloading. The suitable times may represent anticipated low load in the cellular network providing the wireless cellular radio connection.

In one embodiment of the invention, the at least one processor of the apparatus is further configured to receive from a remote control unit a selection of a user profile and to indicate from the mobile node to the remote node an identifier of the current user of the mobile node and the user profile parameters of the current user for user interface adaptation. The remote node may be a server providing a user interface layout or a server providing a content catalog, which may be separate servers.

In one embodiment of the invention, the at least one processor of the apparatus is further configured to transition to a background download disabled state in response to detecting the change to the browsing mode.

In one embodiment of the invention, the mobile node comprises a Long-Term Evolution (LTE) User Equipment or a Universal Mobile Telecommunications System (UMTS) User Equipment.

In one embodiment of the invention, the display is comprised in an external television. The display may be the screen of the external television. The mobile node may be configured to control the display via an interface in the mobile node.

In one embodiment of the invention, the remote node is a remote mobile node, for example an LTE User Equipment (UE). The remote node may also be a desktop, a desk computer or a server. The remote node may also be a fixed network node.

In one embodiment of the invention, the mobile node, for example, a User Equipment (UE) comprises a mobile station or generally a mobile terminal. In one embodiment of the invention a user of a mobile terminal is identified using a subscriber module, for example, User Services Identity Module (USIM) or a Subscriber Identity Module (SIM). The combination of Mobile Equipment (ME) and a subscriber module may be referred to as a mobile subscriber. A mobile subscriber may be identified using an IMSI. An IP address may be allocated or associated with a mobile subscriber.

In one embodiment of the invention, a content catalog item comprises a reference to a content item, for example, a file, and may also comprise information describing the content item referred to. The reference may be a URL, a URI or a logical name. The information describing the content item may be content item related metadata.

In one embodiment of the invention, the computer program may comprise code adapted to cause at least one of the method steps mentioned herein, when executed on a data-processing system.

In one embodiment of the invention, the computer program is comprised or stored on a computer readable medium. The computer readable medium may be, but is not limited to, a removable memory card, a removable memory module, a magnetic disk, an optical disk, a holographic memory or a magnetic tape. A removable memory module may be, for example, a USB memory stick, a PCMCIA card or a smart memory card.

In one embodiment of the invention, the computer program product is stored on a computer readable medium. The computer readable medium may be, but is not limited to, a removable memory card, a removable memory module, a magnetic disk, an optical disk, a holographic memory or a magnetic tape. A removable memory module may be, for example, a USB memory stick, a PCMCIA card or a smart memory card.

The embodiments of the invention described hereinbefore may be used in any combination with each other. Several of the embodiments may be combined together to form a further embodiment of the invention. A method, an apparatus, a computer program or a computer program product to which the invention is related may comprise at least one of the embodiments of the invention described hereinbefore.

It is to be understood that any of the above embodiments or modifications can be applied singly or in combination to the respective aspects to which they refer, unless they are explicitly stated as excluding alternatives.

The benefits of the invention are related to improved user interfaces adaptable based on mobile node environment, location, connected devices, radio interface quality in wireless cellular networks and avoiding delays and waiting in content consumption in mobile nodes.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** illustrates a television browser system communicating with a mobile communication system that comprises a content server in one embodiment of the invention;
**Fig. 2** is a message sequence chart illustrating a method for content selection, retrieval and presentation in a mobile node acting as a television browser node in one embodiment of the invention; and
**Fig. 3** illustrates a user interface layout for high bitrate and a user interface layout for a low bitrate in one embodiment of the invention;
**Fig. 4** is a flow chart illustrating a method for content selection, retrieval and presentation in a mobile node serving as a television browser node in one embodiment of the invention; and
**Fig. 5** is a block diagram illustrating an apparatus in one embodiment of the invention.

### DETAILED DESCRIPTION OF THE EMBODIMENTS:

Reference will now be made in detail to the embodiments of the present invention, examples of which are illustrated in the accompanying drawings.

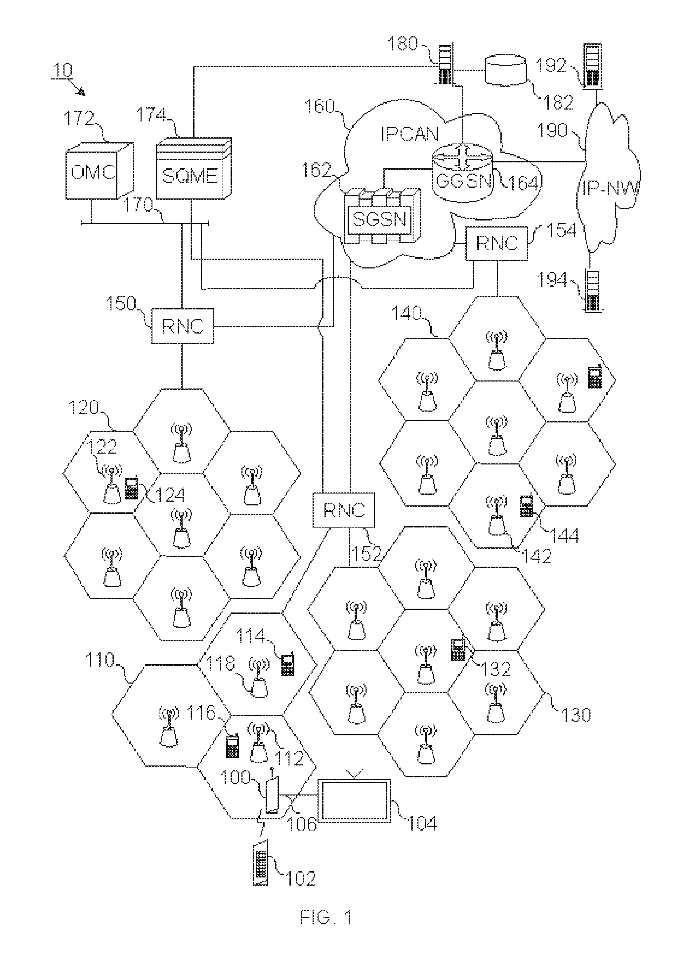

Figure 1 illustrates a television browser system communicating with a mobile communication system that comprises a content server in one embodiment of the invention.

In Figure 1 there is illustrated a mobile communication system 10 comprising operator network elements and network elements of external service providers. In Figure 1 there are illustrated Radio Access Network (RAN) areas 110, 120, 130 and 140. The RAN areas may represent different geographical areas with very different quality of service in terms of the bitrate provided. This may be due to the fact that different RAN areas may also serve areas with different economic statuses and population densities. In RAN area 110 there is illustrated a base station 112 and a base station 118. Within the cell footprint of base station 118 there is a mobile node 114, which may be an ordinary cellular phone. Within the cell footprint of base station 112 there is a mobile node 116, which may also be an ordinary cellular phone. In RAN area 120 there is illustrated a base station 122 and a mobile node 124. In RAN area 130 there is illustrated a mobile node 132. In RAN area 140 there is illustrated a base station 142 and a mobile node 144 within the cell provided by base station 142. RAN area 120 is connected to a Radio Network Controller (RNC) 150. RAN area 140 is connected to a Radio Network Controller (RNC) 154. RAN area 130 is connected to a Radio Network Controller (RNC) 152.

RNCs 150, 152 and 154 may be communicatively connected to an Operations and Maintenance Centre (OMC) 172 and a Service Quality Measurement Entity (SQME) 174. The OMC provides for remote monitoring of cellular network performance and permits remote reconfiguration and fault management activity as well as monitoring of alarms and events. An OMC-R part of OMC 172 performs the monitoring, measuring and maintenance of base stations and RNCs. OMC 172 and SQME 174 are connected with a network 170 or SQME 174 may be a part of OMC 172. OMC 172 or SQME 174 issue requests to RNCs 150, 152 and 154 to further cause base stations in RAN areas 110, 120, 130 and 140 to perform various traffic measurements with mobile nodes, for example, measurements regarding observed download or upload bitrate, bit error rate or bitrate variations. There may also be traffic measurements regarding frequency of handovers between different systems such as WCDMA, HSDPA and GPRS in different areas. The traffic measurements may be performed by any high-end or low-end mobile nodes, not just mobile nodes with specific capabilities for using an external display, provided that a given measurement type is supported by a mobile node. The traffic measurements are reported by base stations, for example, base stations 122, 118, 112 and 142 to OMC 172 or SQME 174 via the respective RNCs or the base stations. The traffic measurement related traffic may be routed directly between base stations and SQME 174 or OMC 172. This would be the case in Long-Term Evolution (LTE) E-UTRAN where there exist no RNCs. Based on the traffic measurements SQME 174 constructs statistics based on average or median bitrates, or average or median download times for a specific amount of data. The statistics are constructed regarding, for example, different routing areas, different location area, different tracking areas, different cell groups, different cells, or even within different areas in the footprint of a single cell for specified times such as for specific times-of-day or specific days. The statistics may also comprise information on special holidays. The time-of-day specific statistics may also be kept separately for different days of the week.

In Figure 1 there is also illustrated a mobile node 100, which may also be called a television browser node. Mobile node 100 is connected to an external display 104, for example, a conventional digital or analog television. The television may be, for example, a plasma television, an LCD television or a projector for a screen. Mobile node 100 is controlled using a remote control unit 102. Mobile node 100 may be also referred to as a cellular phone, a cellular terminal, a cellular modem, a mobile terminal, a mobile phone, a personal digital assistant, a handset or a browser node. Remote control unit 102 may comprise a keypad for controlling television 104 directly and the remote control unit 102 may comprise a keypad for controlling mobile node 100, which may be a separate keypad. The separate keypad may be placed underneath remote control unit 102. The keypads for television 104 and mobile node 100 may be placed on opposite sides or one of these keypads may be hidden behind a sliding cover or any cover. The communication between mobile node 100 and remote control unit 102 occurs, for example, over Infrared (IR) or over a Radio Frequency (RF). Mobile node 100 is configured to communicate with a base station 112 in RAN area 110. Base station 112 is communicatively connected to RNC 152, which is further communicatively connected to an IP Connectivity Access Network (IP CAN) 160. Base station 112 is, for example, a UMTS Node B. RAN 110 is communicatively connected to IP CAN 160, which comprises a Serving GPRS Support Node (SGSN) 162 and a Gateway GPRS Support Node (GGSN) 164. GGSN 164 provides an IP address for browser node 100 and provides connectivity to a content server 180 and to an IP network 190, for example, the Internet or an Intranet. To the IP network is communicatively connected a media server 192 and a media server 194, which are operated, for example, by a content provider organization.

Content server 180 comprises a database 182, which may comprise or obtain information on content providers and content consumers. Database 182 may also comprise information on at least two different user interface layouts. Database 182 may classify user interface layouts based on a number of criteria. The user interface layouts stored in database 182 may be indexed, for example, based on at least one of a download bitrate category, a display size, a display aspect ratio, a display resolution, a television system standard (e.g. PAL/NTSC) for the display, and at least one audio capability. At least one of these index criteria may be used to find a correct user interface layout for a mobile node. Content server 180 may also adapt a preliminary user interface layout obtained first based on, for example, a specific display resolution and display size to a specific download bitrate category. For the selection of a bitrate category, that is, a bitrate value range, may use a bitrate provided by a mobile node, for example, mobile node 100, when it requests a user interface layout from content server 180. The bitrate provided by the mobile node may be an average, a median bitrate, a peak bitrate or a lowest bitrate measured during a specific time window. A user interface layout may also be called a user interface template or form.

Database 182 stores also at least one content catalog, a content catalog comprises a number of catalog items. A catalog item may represent at least one associated content item to be presented in a placeholder selected for the catalog item. A catalog item comprises at least one content item locator, for example, a Uniform Resource Locator (URL) or a Uniform Resource Identifier (URI). A catalog item may also further comprise a list of at least two associated content item locators. One of the associated content item locators in the list may refer to information comprising a spatial layout for presenting at least one another content item referred to using a locator among the associated content item locators, within the placeholder that is selected for the catalog item. An example of such a spatial layout file is a hypertext file, for example, Hypertext Markup Language (HTML) file. A catalog item, which comprises an associated list of locators, may have in the associated list a locator that refers to a file that determines a spatiotemporal schedule and an optional audio schedule for presenting at least one another file referred to in the list of locators. The at least one another file referred to in the list of locators is presented in a placeholder that is selected for the catalog item. An example of a file that determines such a spatiotemporal schedule is a file being of the Synchronized Multimedia Integration Language (SMIL) format or the MPEG-4 format. A content catalog item may also comprise information that assists in selecting a suitable placeholder in the user interface layout for a content catalog item comprised in a content catalog. The information that assist in selecting a suitable placeholder may comprise at least one of: an identifier of a placeholder, coordinates of a placeholder, a size of a placeholder, the dimensions of a placeholder, location of a placeholder on the user interface layout, and a location category of a placeholder on the user interface layout such as, for example, whether the placeholder is a banner, a part of a table for at least one advertisement. A content catalog item may also comprise information regarding the targeted audience for the content referred to in the content catalog item. The information regarding the targeted audience may comprise at least one of an age, an educational level, an income category, a location of a requesting mobile node, an interest category, a hobby and a television program watched.

In one embodiment of the invention, content server 180 builds content catalogs per request using entries storing information for content catalog items in database 182, when it receives a request for a content catalog from a mobile node, for example, mobile node 100. In the building process, content server 180 may take into account information provided from a mobile node such as mobile node 100 regarding a targeted audience and use the information regarding the targeted audience in information in database 180 associated with at least one content catalog item.

Initially, mobile node 100 registers to IP-CAN 160 and specifically to SGSN 162 therein via base station 112 and RNC 152. Thereupon, mobile node 100 may be authenticated by SGSN 162. A Packet Data Protocol (PDP) content is opened to GGSN 164 and mobile node 100 obtains an IP address for communicating with content server 100.

Thereupon, mobile node 100 determines a number of parameters for the selection of at least one of a user interface layout and a content catalog. The parameters comprise at least one of display resolution, display model, a bitrate measured by mobile node 100, for example, on the air interface for communicating with base station 112, a delay for downloading at least one bit block of known size as measured by mobile node 100, the cell of mobile node 100, a geographic location of mobile node 100, a cell sector or beam of mobile node 100, a distance of mobile node 100 to base station 112, a location of mobile node 100 within the cell footprint of a cell of base station 112, a group of user profile parameters associated with the current user of mobile node 100, a group of user profile parameters associated with the all users of mobile node 100, number of people determined to be in the vicinity of mobile node 100 using speaker recognition, and information regarding targeted audience for content referred to in content catalog items. Mobile node 100 requests a user interface layout and provides at least one of the parameters for the selection of a user interface layout or content catalog to content server 180. Using database 182, content server 180 obtains a user interface layout that matches or matches best the parameters for the selection of a user interface layout that were provided by mobile node 100. Content server 180 provides the user interface layout obtained to mobile node 100 in response. Thereupon, mobile node 100 requests a content catalog from content server 180. Content server 180 forms a content catalog using information in database 182 or selects a predefined content catalog from database 182. In the forming of the content catalog or in the selection of the content catalog, content server 180 may use at least one of the parameters for the selection of a user interface layout or content catalog provided to content server 180 in association with the user interface layout request or separately. Content server 180 may use a subset of the parameters for the selection of a user interface layout or content catalog that are related to a targeted audience. Content server 180 may also use a subset of the parameters for the selection of a user interface layout or content catalog that are related to at least one user profile of mobile node 100. In response, content server 180 provides to mobile node 100 the content catalog. The content catalog comprises a list of content catalog items that may be downloaded to mobile node 100 using locators comprised in the catalog items. Mobile node 100 parses the content catalog for the content catalog items and downloads at least one content item referred to using a locator within a content catalog item. Mobile node 100 may download the at least one content item from either media server 192 or media server 194, depending on the locator.

In one embodiment of the invention, content server 180 obtains information regarding anticipated download times at specific time from SQME 174, for example, based on traffic measurements. The information may complement the information received from a mobile node requesting a user interface layout or a content catalog. Upon receiving a request for a user interface layout or a content catalog, content server 180 sends an enquiry for information assisting in determining an anticipated download quality of service. Upon receiving the enquiry from content server 180, which may comprise a location of a mobile node such as mobile node 100, SQME 174 reads the statistics pertaining to the location from its database using the current time as an additional search criterion. SQME 174 responds with a message comprising the statistics read from its database or a computed anticipated download time for at least one file or content size. Content server 180 determines an anticipated download time for a number of potential contents of specific sizes and takes into account an available time budget for performing the download process. The time budget may be based on a specific time interval indicated from mobile node 100 as suitable for downloading content, for example, a television program not viewed by the current user of mobile node 100 or a break for commercials.

In one embodiment of the invention, in user profiles within mobile node 100 may be stored at least one user profile attribute. The at least one user profile attribute may comprise at least one interest category for a user. The at least one user profile attribute may also comprise at least one demographic attribute of the user such as, for example, gender, race, age, disabilities, mobility, home ownership, employment status and location.

In one embodiment of the invention at least one content catalog item associated parameter, that is used to filter out or select content catalog items using the parameters, provided from a mobile node such as mobile node 100, in association with user interface layout request or content catalog request, may comprise, for example, gender, race, age, disabilities, mobility, home ownership, employment status and location of mobile node 100.

In one embodiment of the invention, before starting to download content packages, mobile node 100 may identify the current user of mobile node 100 by allowing the user to select his or her profile, using remote control unit 102. Associated with a user profile may be the user profile attributes mentioned hereinbefore.

In one embodiment of the invention, the content packages stored in television browser node 102 are presented to a user in several phases. In the first phase content packages available are indicated to the user. The indication may comprise the presentation of an icon, a thumbnail or a label that gives an indication of the type of content in a content package. Thereupon, the user selects a content package based on the indication, using a pointer tool of remote controller unit 102 and the selection is indicated to mobile node 100. Thereupon, the content package content is presented, for example, on a window to the user. Thereupon, the user may select a hyperlink embedded in the content package, using remote controller unit 102, for example, on a page, an image or a video for the selection of a content item that needs to be downloaded upon the selection of the hyperlink by the user, this may be interpreted so that the content item is not downloaded to the mobile node 100 beforehand.

In one embodiment of the invention, a change to a background download enabled state is detected in a mobile node. Downloading of data from content server 180 may be performed in this state in one embodiment of the invention.

In one embodiment of the invention, the background download enabled state is detected in response to a selection of television program viewing mode via a remote control unit.

In one embodiment of the invention, there are additional conditions for detecting the background download enabled state, in addition to the selection of television program viewing mode. An additional condition may be that mobile node 100 remains in television program viewing mode for a predefined time. The predefined time may be, for example, one minute. An additional condition may be that the mobile node receives, for example, from a content server such as content server 180 or SQME 174 or base station 112, an indication of a suitable time for background downloading of content. By content in this case is meant such as user interface layouts, content catalogs and content item such as content files. The suitable time may be determined by the content server 180 or SQME 174 based on network load information obtained in the radio access network over which wireless cellular connections are established between mobile node 100 and content server 180.

In one embodiment of the invention, the mobile node may indicate to the content server 180 an identifier of the current user of the mobile node. The identifier may be, for example, an E-mail address, a Uniform Resource Identifier (URI), a Uniform Resource Locator (URL), a SIP URI and a Tel-URI. The identifier may comprise a user name part and a domain name part.

It should be noted that the number of network elements and mobile nodes, in particular, in Figure 1 is just for illustrative purposes. There may be any number of network elements of the types illustrated in Figure 1.

The embodiments of the invention described hereinbefore in association with Figure 1 may be used in any combination with each other. Several of the embodiments may be combined together to form a further embodiment of the invention.

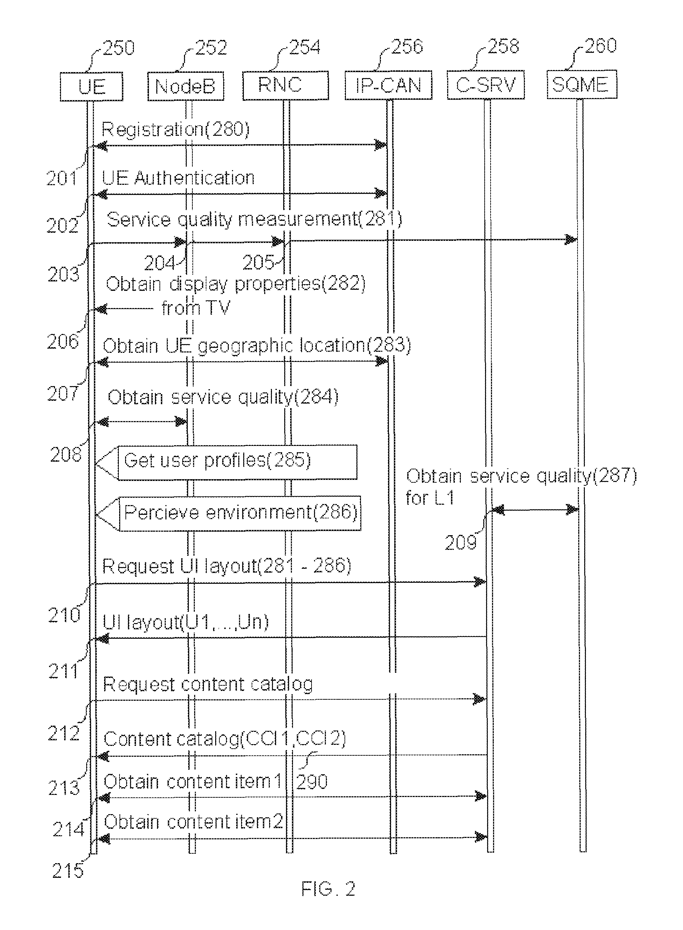

Figure 2 is a message sequence chart illustrating a method for content selection, retrieval and presentation in a mobile node acting as a television browser node in one embodiment of the invention. In Figure 2 there is user equipment 250, that is, a mobile node such as, for example, mobile node 100 in Figure 1. In Figure 2 there is also a Node B 252, which may also be a base station or an E-UTRAN eNB. In Figure 2 there is also a Radio Network Controller (RNC) 254, an IP Connectivity Access Network (IP-CAN) 256, a Content Server (C-SRV) 258 and a Service Quality Measurement Entity (SQME) 260. In the case of E-UTRAN RNC 254 is omitted and Node B 252, IP-CAN 256 and SQME 260 communicate directly. SQME 260 may be a function within an Operations and Maintenance Centre (OMC), for example, an OMC-R for radio network functionalities.

In one embodiment of the invention, SQME 260 is a function in association with Node B 252. In such a case an SQME in association with a Node B or a base station maintains statistics only regarding the area of the Node B or the base station that it is associated with as a function. An SQME may also be a function within a Node B or base station. This case could be in the case of LTE E-UTRAN.

As illustrated with arrow 201, UE 250 performs a network registration with IP-CAN 256. The registration may be performed with an SGSN and optionally with a Mobile Switching Centre (MSC) within a circuit switched Core Network (CN). In response to the registration UE 250 obtains information on its current location, for example, the current cell or the current Routing Area (RA). An information element comprising the information on current location is illustrated in with reference numeral 280.

As illustrated with arrow 202, UE 250 is authenticated by IP-CAN 256. In response to successful authentication UE 250 may use the services of IP-CAN 256 to obtain connectivity to at least one external IP network such as the Internet.

In one embodiment of the invention, as illustrated with arrow 203, UE 250 reports to Node B 252 results of a service quality measurement. The information element comprising the results of the service quality measurement is illustrated with reference numeral 281.

In one embodiment of the invention, the service quality measurement may comprise information on at least one of a bitrate, an average bitrate, an average bitrare during a specific time interval, a median bitrate, a peak bitrate, download delay for a test data block of known size, downlink radio interface delay, and a bit error rate. The service quality measurement may be reported as a response to a previous request from Node B 252.

In one embodiment of the invention, as illustrated with arrow 204, Node B 252 reports to RNC 254 the results of the service quality measurement, illustrated with reference numeral 281.

In one embodiment of the invention, as illustrated with arrow 205, RNC 254 reports to SQME 260 the results of the service quality measurement, illustrated with reference numeral 281.

As illustrated with arrow 206, UE 250 obtains at least one display property from a display via an interface connecting the UE to the display. The display properties may be obtained from the display using Display Data Channel (DDC) protocol. The information element comprising the at least one display property is illustrated with reference numeral 282.

In one embodiment of the invention, the display is an external television.

In one embodiment of the invention, the mobile node is a unit within the display such as a television.

In one embodiment of the invention, the display properties comprise at least one of a display size, a display resolution, a model, a display manufacturer, color depth, support for 3D, an audio capability, display aspect ratio, type of 3D support, at least one Electronic Program Guide capability.

In one embodiment of the invention, as illustrated with arrow 207, UE 250 obtains a geographic location of UE 250, for example, from IP-CAN 256 or on its own. The geographic location may be obtained via IP-CAN 256 using network based geographic positioning such as, for example, the cell coverage based positioning method, the Observed Time Difference Of Arrival (OTDOA) method or a network assisted GPS method. UE 250 may acts as an LCS client for an LCS server (not shown) within IP-CAN 256. UE 250 may also position itself using the Global Positioning System (GPS). UE 250 may also obtain its cell identifier. The positioning may be performed periodically to keep up to date position information in UE 250. The information element comprising the geographic location of UE 250 is illustrated with reference numeral 283.

In one embodiment of the invention, as illustrated with arrow 207, UE 250 obtains information on service quality from Node B 252. The service quality information may be obtained by requesting a downloading of a sample data block from Node B 252 or by requesting an average measured bitrate for downloading in the cell provided by Node B 252. The service quality information may also comprise a schedule of average bitrates or other quality of service parameters at different times-of-day in the past. The schedule may be gathered in Node B 252 using traffic measurements executed locally within the cell of Node B 252. Node B 252 may form statistics similar to those formed by SQME 174 in the case of Figure 1. SQME 174 of Figure 1 is SQME 260 in Figure 2. The information element comprising the information on service quality is illustrated with reference numeral 284.

Thereupon, UE 250 reads user profile information associated with either the current user of UE 250 or all users of UE 250 in the memory of UE 250. The information element comprising user profile information is illustrated with reference numeral 285.

Thereupon, UE 250 perceives local environment information by, for example, recording with a microphone and a speaker recognizer the number of people the speech volume of which exceeds a predefined threshold. UE 250 may also use a camera pointing from the display towards viewers and a face recognizer to recognize the number of viewers in front of the television. The information element comprising the number of people perceived from local environment using either method is illustrated with reference numeral 286.

In one embodiment of the invention, as illustrated with arrow 209, content server 258 may obtain from SQME 260 an information element comprising service quality information, illustrated with reference numeral 287. A request from content server 258 to SQME 260 may comprise a location of UE 250. SQME 260 reads the statistics pertaining to the location from its database using the current time as an additional search criterion. SQME 260 responds to content server 258 with a message comprising the statistics read from its database or a computed anticipated download time for at least one file or content size. Content server 258 may determine an anticipated download time for a number of potential contents of specific sizes and takes into account an available time budget for performing the download process. The time budget may be based on a specific time interval indicated from UE 250 as suitable for downloading content, for example, a television program not viewed by the current user of UE 250 or a break for commercials.

As illustrated with arrow 210, UE 250 requests a user interface layout from content server 258. The request comprises at least one of the information elements designated in Figure 2 with reference numerals 281 - 286. Some of the information elements 281 - 286 or their parts may be omitted depending on the embodiment of the invention.

As illustrated with arrow 211, content server 258 responds to the request illustrated with arrow 210 with a user interface layout to UE 250. More than one user interface layout may also be provided to UE 250 in response in one embodiment of the invention. Content server selects a user interface layout based on information in at least one of the information elements designated in Figure 2 with reference numerals 281 - 287. For example, if the service quality information element indicated with reference numeral 284 or 287 indicates a low bitrate, content server 258 selects a user interface layout with a smaller number of placeholders and smaller placeholders. The bitrate may be low temporarily or during a longer period of time. A placeholder may be described as an empty place or display area for an image that has a specific location, a video or a hypertext page, which may in turn comprise images or any other content usually displayed on WWW pages. On the other hand, for example, if the service quality indicated with information element referred to using reference numeral 284 indicates a high bitrate, content server 258 selects a user interface layout with a larger number of placeholders and larger placeholders. The bitrate indicated by UE 250 may be assigned first to a bitrate category, for example, low, medium or high which specified value ranges and the selection of the user interface layout is performed based on the bitrate category. In one embodiment of the invention, the bitrate indicated by UE may be an average bitrate in a specific time window, mean bitrate in a specific time window, median bitrate in a specific time window, or peak bitrate in a specific time window, or a temporary bitrate.

As illustrated with arrow 212, UE 250 requests from content server 258 a content catalog. The request may also comprise at least one of the information elements designated in Figure 2 with reference numerals 281 - 286. This may be the case, if content server 180 does not maintain a session state for dialogues towards different UEs.

As illustrated with arrow 213, content server 258 provides in response to UE 250 a content catalog. The content catalog comprises at least two content catalog items, illustrated in Figure 2 with reference number 290, which contain reference information assisting in the population of placeholders in the user interface layout, provided to UE 250 in message illustrated with arrow 211. The at least two content catalog items each also contain references, that is, locators such as URLs or URIs to content items, for example, content catalog item CCI1 could contain a reference to content item downloaded as illustrated with arrow 214 and content catalog item CCI2 could contain a reference to content item downloaded as illustrated with arrow 215. Items to be included in the content catalog may be selected by content server 258 using information in at least one of the information elements designated in Figure 2 with reference numerals 281 - 286 and optionally the information element designated with reference numeral 287. For example, at least one information element pertaining to at least one user profile attribute may be used in the selection of content catalog items for the content catalog. The selection may work by exclusion from an initial list of content catalog items or by inclusion using the at least one user profile attribute as a search criterion. The at least one user profile attribute may comprise at least one interest category for a user. The at least one user profile attribute may also comprise at least one demographic attribute of the user such as, for example, gender, race, age, disabilities, mobility, home ownership, employment status and the location of UE 250. Therefore, content may be tailored based on demographics of the users. Similarly, content inappropriate for children may be filtered out. Alternatively, content considered appropriate for children or another user group may be actively selected.

In response to obtaining the content catalog, as illustrated with arrow 213, UE 250 matches at least two content catalog items to at least two placeholders in the user interface layout. In an embodiment of the invention, any number of content catalog items may be matched to any number of placeholders. The matching is based on information associated with the at least two placeholders in the user interface layout and information associated with the at least two content catalog items. The information for a placeholder comprises, for example, at least one of a size of the placeholder, a preferred content type for the placeholder, dimensions of the placeholder, and place of the placeholder on the user interface layout. The information for a content catalog item comprises, for example, at least one of a resolution for a video to be presented in a placeholder, aspect radio of a video to be presented in a placeholder, dimensions of a picture to be presented in a placeholder, resolution of a picture to be presented in a placeholder, a type of a content item to be presented in a placeholder, the amount of text in a hypertext file to be presented in a placeholder, the dimensions of a hypertext document to be presented in a placeholder, and the font size of a hypertext document to be presented in a placeholder. In Figure 2 it is assumed that UE 250 determines a first placeholder for a first content item and a second placeholder for a second content item based on their matching or compatible properties.

As illustrated with arrow 214, UE 250 obtains a first content item from content server 258. The content item may also be obtained from any Internet server. The first content item is presented in the first placeholder.

As illustrated with arrow 215, UE 250 obtains a second content item from content server 258. The content item may also be obtained from any Internet server. The second content item is presented in the second placeholder.

It should be noted that information designated with reference numerals 281 - 287 is considered to comprise a number of distinguishable information elements such as bits, bytes, fields or the like. Each of reference numerals 281 - 287 represents at least one information element. An information element may further comprise at least two further information elements. An information element may be encoded using any number of bits or octets. An information element may also be represented as a name and value pair. An information element may also be represented as an attribute and value pair. A number of information elements may be grouped to form an XML documents or an XML document fragment. A number of information elements may be grouped to form a JavaScript Object Notation (JSON) document or JSON document fragment or string. The number of information elements grouped may be at least one. Similarly, the entries or records storing information for content catalog items in database 182 may be stored as information elements in a manner and format similar to the information elements referred to using reference numerals 281 - 287. Alternatively, the entries or records storing information for content catalog items in database 182 may be converted by content server 258 to a format similar to the format of the information elements referred to using reference numerals 281 - 287 before executing a selection of a user interface layout or the forming of a content catalog.

The embodiments of the invention described hereinbefore in association with Figures 1 and 2 may be used in any combination with each other. Several of the embodiments may be combined together to form a further embodiment of the invention.

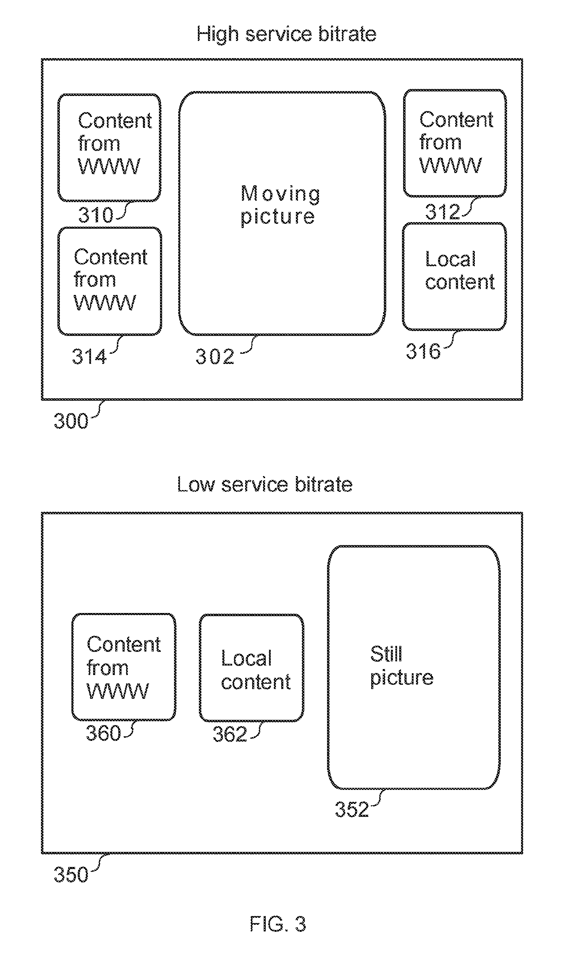

Figure 3 illustrates a user interface layout for high bitrate and a user interface layout for a low bitrate in one embodiment of the invention. The user interface layouts are for a mobile node, for example, mobile node 100 or UE 250 that may use an external display to display content. In Figure 3 there is a user interface layout 300 for high bitrate service. There is a large placeholder 302 for a moving picture, for example, downloadable or downloaded from the Internet. There are small placeholders 310, 312 and 314 for content from the Internet. There is also a small placeholder 316 for content already in the memory of the mobile node such as own or downloaded photos stored in the mobile node. In Figure 3 there is a user interface layout 350 for low bitrate service. There is a large placeholder 352 for a still picture, for example, downloadable or downloaded from the Internet. There are smaller placeholders 360 and 362. Placeholder 360 is for content from the Internet, whereas placeholder 362 is for content from the memory of mobile node such as user's photos from a photo directory in a non-volatile memory within the mobile node or associated with the mobile node, for example, via a USB-interface.

The user of the mobile node may select one of the placeholders via a selection tool such as a mouse or any other pointer. After the selection of a placeholder, the playing of a video associated with the placeholder may be started. Before the selection, a still picture or a short video may be shown on the placeholder. The still picture or the short video together with the video started by the selection of the placeholder may be defined in a content catalog item that has been associated with the placeholder, for example, based on size matching between the video resolution and the size of the placeholder.

In one embodiment of the invention, associated with at least one of the placeholders 310, 312, 314, 316, 360, 362, 352 in Figure 3, there is information, for example, at least one attribute per placeholder. The attributes may comprises, for example, at least one of an identifier, a position type comprising information on the area where the placeholder is located on the user interface layout, a size, dimensions of the placeholder, a shape of the placeholder and a position of the placeholder.

The embodiments of the invention described hereinbefore in association with Figures 1, 2 and 3 may be used in any combination with each other. Several of the embodiments may be combined together to form a further embodiment of the invention.

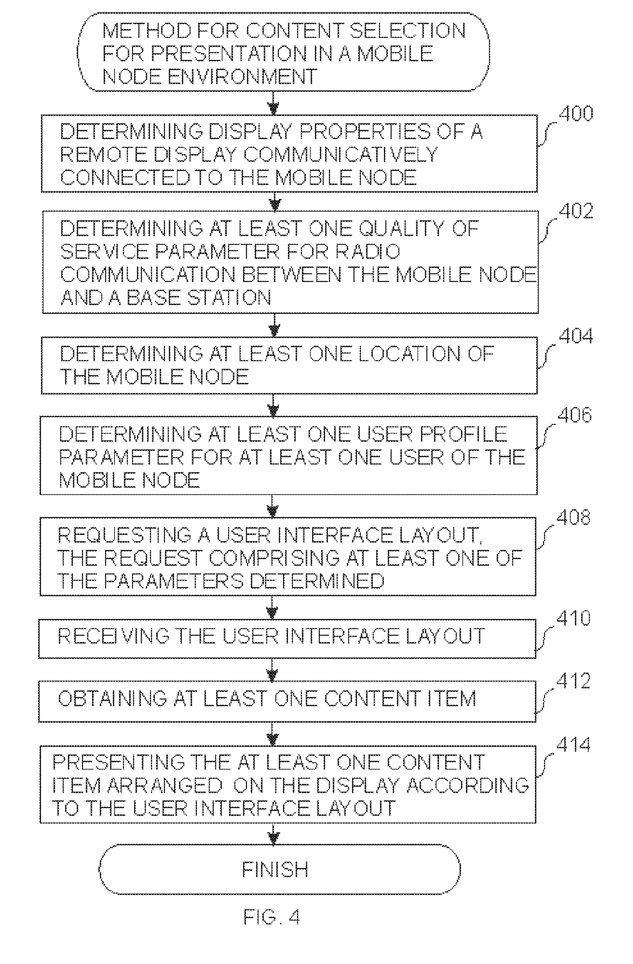

Figure 4 is a flow chart illustrating a method for content selection, retrieval and presentation in a mobile node serving as a television browser node, that is, a mobile node in one embodiment of the invention.

At step 400 the mobile node determines at least one display property of a remote display communicatively connected to the mobile node.

At step 402 at least one quality of service parameter for radio communication between the mobile node and a base station is determined.

At step 404 at least one location of the mobile node is determined. The location may be, for example, at least one of a cell identifier, a cell beam or cell sector identifier, a geographic location, an address or GPS coordinates.

At step 406 at least one user profile parameter is determined for at least one user of the mobile node from a memory of the mobile node.

At step 408 a user interface layout is requested to the mobile node, the request or a separate message comprising at least one of the at least one quality of service parameter, the at least one location of the mobile node, the at least one user profile parameter determined for the at least one user of the mobile node. The request and the optional separate message may be sent to a server storing the user interface layout and optionally at least one another user interface layout.

At step 410 the user interface layout is received to the mobile node.

At step 412 at least one content item is obtained from a server, for example, the server storing the user interface layout.

At step 414 the at least one content item is arranged on the display according to the user interface layout.

Thereupon, the method is finished.

In one embodiment of the invention, the mobile node obtains a content catalog comprising at least two content catalog items comprising at least one link to at least one content item.

In one embodiment of the invention, the content catalog is formed, for example, in the server storing the user interface layout using the at least one of the at least one quality of service parameter, the at least one location of the mobile node, the at least one user profile parameter determined for the at least one user of the mobile node.

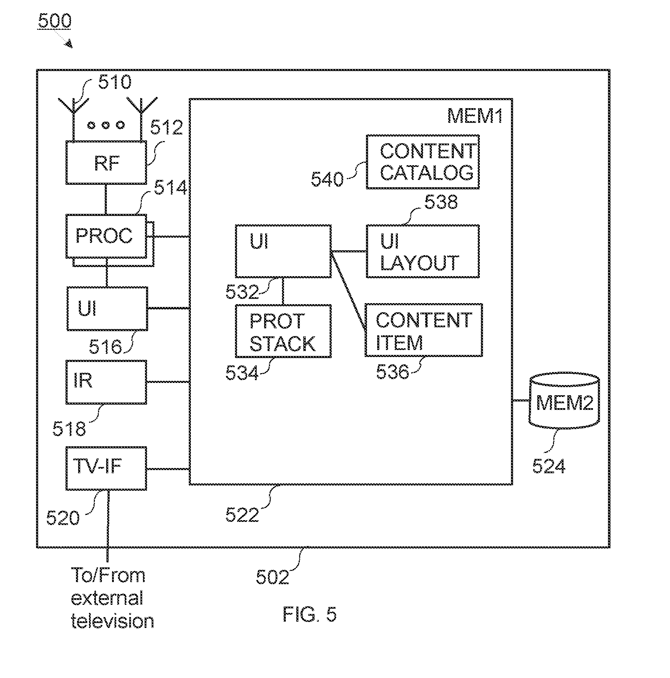

Figure 5 is a block diagram illustrating an apparatus in one embodiment of the invention. In Figure 5 there is an apparatus 500, which is, for example, a browser node, a mobile node, user equipment, a handset, a cellular phone, a mobile terminal, an Application Specific Integrated Circuit (ASIC), a chip or a chipset. Apparatus 500 may correspond to mobile node 100, for example, a television browser node illustrated in Figure 1. The internal functions of apparatus 500 are illustrated with a box 502. Apparatus 500 may comprise at least one antenna 510. There may be multiple input and output antennas. In association with apparatus 500 there is Radio Frequency (RF) circuit 512. RF circuit 512 may be also any circuit or may be referred to as circuit 512. RF circuit 512 is communicatively connected to at least one processor 514. Connected to processor 514 there may be a first memory 522, which is, for example, a Random Access Memory (RAM). There may also be a second memory 524, which may be a non-volatile memory, for example, an optical or magnetic disk. There may also be a maintenance User Interface (UI) 516 and an IR transceiver 518. There may also be an Interface 520 to an external television or display (not shown). In memory 522 there may be stored software relating to functional entities 532 and 534. A user interface entity 532 displays one or more contents using user interface layout 538 such as content 536 on a television screen connected to browser node 500 via interface 520. User interface entity 532 also requests user interface layout 538 from an external content server or node (not shown). User interface entity 532 also requests a content catalog 540 from an external content server or node (not shown) and downloads at least one content item 536 using information in content catalog 540. User interface entity 532 also places content items such as content item 536 on user interface layout 538 based on information in content catalog 540. User interface entity 532 communicates with an external remote control unit (not shown) via IR transmitter/receiver 518. Via IR transmitter/receiver 518 are received controls to switch user interface entity 532 between a television viewing mode and a content browsing mode. User interface entity communicates with a base station using a protocol stack 534. The protocol stack may communicate also with the remote node. Protocol stack entity 534 comprises control plane protocol functions related to the interface towards a base station such as, for example, a UMTS Node B. Protocol stack entity 534 also comprises protocol functionalities related to user plane data communication with any content server. Protocol stack entity 534 may be, for example, an internet protocol stack.

When the at least one processor 514 executes functional entities associated with the invention, memory 522 comprises entities such as, any of the functional entities 532 and 534. The functional entities within apparatus 500 illustrated in Figure 5 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optical disk. Some functional entities may be implemented as program modules linked to another functional entity. The functional entities in Figure 4 may also be stored in separate memories and executed by separate processors, which communicate, for example, via a message bus or an internal network within the network node. An example of such a message bus is the Peripheral Component Interconnect (PCI) bus.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. One or more databases can store the information regarding cyclic prefixes used and the delay spreads measured. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

The embodiments of the invention described hereinbefore in association with the figures presented may be used in any combination with each other. Several of the embodiments may be combined together to form a further embodiment of the invention.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
determining by a mobile node at least one parameter for user interface adaptation, the mobile node comprising an interface for communicating with a display;
providing the at least one parameter for user interface adaptation to a remote node from the mobile node;
obtaining a user interface layout from the remote node to the mobile node, in response to the providing of the at least one parameter for user interface adaptation;
obtaining a set of content items comprising at least two content items to the mobile node, the at least two content items further comprising a first content item and a second content item; and
presenting at least one content item from the set of content items, the at least one content item being arranged on the display based on the user interface layout.

2. The method according to claim 1, further comprising:
obtaining a content catalog to the mobile node, the content catalog comprising at least two content catalog items, among said at least two content catalog items a first content catalog item and a second content catalog item, the first content catalog item further comprising a first link to the first content item and the second content catalog item further comprising a second link to the second content item.

3. The method according to claim 2, wherein at least one of the at least two content catalog items in the content catalog is selected to the content catalog based on at least one of the at least one parameter for user interface adaptation.

4. The method according to claim 3, wherein the step of presenting at least one content item from the set of content items comprises:
selecting a first placeholder for the first content item and a second placeholder for the second content item on the user interface layout, the selection being based on information in the first content catalog item describing the first content item, information in the second content catalog item describing the second content item, information associated with the first placeholder in association with the user interface layout, and information associated with the second placeholder in association with the user interface layout.

5. The method according to claim 4, wherein the information, associated with the first placeholder in association with the user interface layout, and the information, associated with the second placeholder in association with the user interface layout, comprise at least one placeholder attribute, each placeholder attribute comprising at least one an identifier of a placeholder, a priority, a position type comprising information on the area where the placeholder is located on the user interface layout, a size of a placeholder, dimensions of a placeholder, a shape of a placeholder and a position of a placeholder on the user interface layout, a temporal movement of the placeholder on the display, a genre for a content item allowed to be presented in the placeholder, a viewer age group for a content item allowed to be presented in the placeholder, and whether audio is played for content in a placeholder.

6. The method according to claim 4, wherein the information, in the first content catalog item that describes the first content item, and the information, in the second content catalog item that describes the second content item comprise content item presentation attributes, each content item presentation attribute comprising at least one of a maximum or a minimum display size for optimal viewing of the content item, a size of the content item, an aspect radio of the content item, an identifier for a placeholder for the content item, a list of placeholder identifiers allowed for the content item, a position type allowed for the content item comprising information on the area where the placeholder is located on the user interface layout, a priority for the content item, a size of the content item in pixels or centimeters on the display, the dimensions of a content item, an aspect radio of the content item, a shape of the content item, whether a moving placeholder is allowed for the content item, a genre of the content item, an age group of the content item, a viewer age group of the, content item, a desired area of a placeholder to present the content item, and whether audio is played for content in a placeholder for the content.

7. The method according to claim 1, wherein the step of determining by the mobile node the at least one parameter for user interface adaptation comprises:
obtaining via the interface to the mobile node at least one display property of the display; and
adding the at least one display property among the at least one parameter for user interface adaptation.

8. The method according to claim 1, wherein the step of determining by the mobile node the at least one parameter for user interface adaptation comprises:
determining a location of the mobile node; and
adding the location among the at least one parameter for user interface adaptation.

9. The method according to claim 1, wherein the step of determining by the mobile node the at least one parameter for user interface adaptation comprises:
determining at least one quality of service parameter for radio communication between the mobile node and a base station; and
adding the at least one quality of service parameter among the at least one parameter for user interface adaptation.

10. The method according to claim 9, wherein the at least one quality of service parameter comprises at least one of bitrate, average bitrate, delay and bit error rate.

11. The method according to claim 1, wherein the step of determining by the mobile node the at least one parameter for user interface adaptation comprises:
determining at least one user profile parameter in the mobile node; and
adding the at least one user profile parameter among the at least one parameter for user interface adaptation.

12. The method according to claim 11, wherein the at least one user profile parameter comprises an age of the user.

13. The method according to claim 1, wherein the step of determining by the mobile node the at least one parameter for user interface adaptation comprises:
determining using an audio sensor the number of distinguishable speakers within the range of the audio sensor; and
adding the number of distinguishable speakers as a parameter among the at least one parameter for user interface adaptation.

14. The method according to claim 1, wherein the step of determining by the mobile node the at least one parameter for user interface adaptation comprises:
determining using a camera the number of distinguishable faces within the range of the camera; and
adding the number of distinguishable faces as a parameter among the at least one parameter for user interface adaptation.

15. The method according to claims 1, the method further comprising:
performing a quality of service measurement regarding at least one of bitrate and delay by the mobile node; and
reporting results of the quality of service measurement to a base station serving the mobile node.

16. The method according to claim 15, the method further comprising:
receiving the results of the quality of service measurement to a service quality measurement entity; and forming location and time specific statistics of average bitrates in the service quality measurement entity.

17. The method according to claim 16, the method further comprising:
receiving a location of the mobile node to the remote node; and
obtaining from the service quality measurement entity an anticipated bitrate for content downloading to the mobile node based on the location of the mobile node and current time.

18. The method according to any of the claims 1 - 15, wherein the display is a remote display.

19. An apparatus, comprising:
an interface for a display;
a memory; and
at least one processor configured
to determine the apparatus at least one parameter for user interface adaptation,
to provide the at least one parameter for user interface adaptation to a remote node from the apparatus,
to obtain a user interface layout from the remote node to the apparatus, in response to the providing of the at least one parameter for user interface adaptation,
to obtain a content item group comprising at least two content items to the apparatus, the at least two content items further comprising a first content item and a second content item, and
to present at least one content item from the content item group, the at least one content item being arranged on the display based on the user interface layout.

20. A computer program comprising code adapted to cause the following when executed on a data-processing system:
determining by a mobile node at least one parameter for user interface adaptation, the mobile node comprising an interface for communicating with a display;
providing the at least one parameter for user interface adaptation to a remote node from the mobile node;
obtaining a user interface layout from the remote node to the mobile node, in response to the providing of the at least one parameter for user interface adaptation;
obtaining a set of content items comprising at least two content items to the mobile node, the at least two content items further comprising a first content item and a second content item; and
presenting at least one content item from the set of content items, the at least one content item being arranged on the display based on the user interface layout.
